Europäisches Patentamt

European Patent Office

Office européen des brevets

(19)

(11) Veröffentlichungsnummer: **0 151 272**

**A2**

(12) **EUROPÄISCHE PATENTANMELDUNG**

(21) Anmeldenummer: **84115132.7**

(22) Anmeldetag: **11.12.84**

(51) Int. Cl.⁴: **H 02 G 1/08**
**H 02 G 3/06**

(30) Priorität: **03.02.84 DE 3403774**

(43) Veröffentlichungstag der Anmeldung:
**14.08.85 Patentblatt 85/33**

(84) Benannte Vertragsstaaten:
**CH DE FR IT LI**

(71) Anmelder: **Anton Hummel GmbH Metallwarenfabrik**
**2-4 Mozartstrasse**
**D-7808 Waldkirch(DE)**

(72) Erfinder: **Gehring, Peter**
**Eichhofweg**
**D - 7809 Simonswald-Griesbach(DE)**

(74) Vertreter: **Schmitt, Hans, Dipl.-Ing.**
**Dreikönigstrasse 13**
**D-7800 Freiburg(DE)**

(54) **Winkelförmige Leitungseinführung.**

(57) Eine winkelförmige Leitungseinführung (1) zum Einführen von Kabeln, Leitungen oder Schläuchen in ein Gehäuse od. dgl. hat an ihrer Außenseite einen öffenbaren Verschluß, so daß das Kabel zunächst durch einen Schenkel (2) geradlinig eingeführt, dann zu einer großen Schlaufe gebogen und danach in den zweiten Schenkel (4) eingeführt und aus diesem herausgezogen werden kann. Damit die Öffnung möglichst groß sein kann, ist der Verschlußteil (2) ein winkliges Formstück, dessen Winkelschenkel (7 und 8) jeweils in Richtung der beiden Winkelschenkel (3 und 4) der winkligen Leitungseinführung (1) orientiert sind. Zweckmäßigerweise paßt dabei der Verschlußteil (2) bündig in die Umrißform der Leitungseinführung (1) sowohl bezüglich der Außen- als auch der Innenseite. Dadurch ergibt sich im Inneren auch im Bereich des Verschlußteiles (2) ein genügend großer Querschnitt selbst für dicke Kabel.

Fig.1

**PATENTANWÄLTE**
**DIPL.-ING. H. SCHMITT**
**DIPL.-ING. W. MAUCHER**

7ᴮ FREIBURG I. BR. ᶦ0. Dez. 1984
DREIKÖNIGSTR. 18
TELEPON: (0761) 70773
0051272

1   Firma
Anton Hummel GmbH
Metallwarenfabrik
Mozartstraße 2 - 5
7808 Waldkirch

UNSERE AKTE - BITTE STETS ANGEBEN!

E 84 487 MR

## Winkelförmige Leitungseinführung

Die Erfindung betrifft eine winkelförmige Leitungseinführung zum Einführen von insbesondere elektrischen Leitungen oder Kabeln unter einem Winkel, vorzugsweise einem rechten Winkel, in ein Gehäuse od. dgl., wobei das Kabel zunächst schräg oder parallel zur Gehäusewand verläuft und etwa senkrecht in diese eintritt und die Biegung der Leitung oder des Kabels durch die Einführung vorgegeben ist und wobei an der Außenseite dieser Leitungseinführung in deren Bereich mit dem größeren Krümmungsradius ein öffenbarer Verschluß zum Einführen des Kabels zunächst in nur einen Schenkel der Einführung und zum Bilden einer Schlaufe sowie zum Einführen des Kabels dann in den zweiten Schenkel der Einführung vorgesehen ist.

Eine derartige winkelförmige Leitungseinführung ist aus der Praxis bekannt. Die gekrümmte Außenseite der als Rohrkrümmer ausgebildeten Leitungseinführung ist dabei durhc eine schräg verlaufende, im übrigen jedoch im wesentlichen ebene, also die Krümmung in diesem Bereich abschneidende Platte verschlossen, die zum Öffnen entfernt werden kann.

Mr/H                                                              /2

0151272

Bei geöffneter Platte kann das Kabel zunächst durch den einen Winkelschenkel hindurchgesteckt und aus dieser Öffnung herausgezogen werden, so daß genügend Platz zur Bildung einer Schlaufe an dem Kabel gegeben ist, deren freies Ende dann in den anderen Winkelschenkel hineingesteckt und beispielsweise von der Gehäuseseite her eingezogen werden kann. Ein Kabel ist dadurch einfacher einführbar, als wenn es durch einen geschlossenen Rohrkrümmer hindurchgedrückt und gezogen werden muß. Es entstehen bei einem solchen Einführungsvorgang geringere Reibungskräfte zwischen der Kabelisolierung und der Innenseite der winkelförmigen Leitungseinführung. Abschließend kann der schräge Deckel wieder aufgeschraubt werden.

Nachteilig ist jedoch der Herstellungs- und Montageaufwand einer solchen Leitungseinführung. Darüber hinaus besteht das Problem, daß der schräg liegende Deckel einerseits möglichst groß gemacht werden soll, damit die sich bildende Kabelschlaufe gut in die Einführung eingezogen werden kann, was insbesondere im letzten Moment, in dem die Kabelschlaufe schon relativ klein ist, zu erheblichen Biegebelastungen des Kabels und auch unter Umständen zu Schwierigkeiten führen kann. Andererseits darf der Deckel aber nicht zu groß sein, damit er später nicht zu weit in den Kabelweg gelangt und das Kabel gegen die Innenecke des Krümmers preßt und quetscht. Die Größe des Deckels ist also von vornherein begrenzt und erschwert somit immer noch die Montage.

Es besteht deshalb die Aufgabe, eine winkelförmige Leitungseinführung der eingangs erwähnten Art zu schaffen, bei der die Montage erleichtert ist und die Öffnung der Kabeldicke entsprechend praktisch beliebig groß sein kann, so daß eine Kabelschlaufe auch bei relativ dickem Kabel bequem eingezogen werden kann, ohne daß das Kabel

**0151272**

später im Krümmungsbereich nicht genügend Platz findet.

Die überraschende Lösung dieser scheinbar widersprüchlichen Aufgabe besteht im wesentlichen darin, daß der Verschlußteil ein - zumindest in der Längsmittelebene der Leitungseinführung oder einer dazu parallelen Ebene - winkliges oder bogenförmiges Formstück ist, dessen Winkelschenkel jeweils in Richtung der beiden Winkelschenkel der Leitungseinführung orientiert sind. Dadurch ergibt sich auch nach dem Anbringen des Verschlußteiles im Inneren der Leitungseinführung praktisch keine Querschnittsveränderung, so daß dieser Verschlußteil größer ausgebildet werden kann und somit die Öffnung ein wesentlich besseres Einführen einer Kabelschlaufe selbst bei relativ dickem Kabel erlaubt, ohne daß das Kabel später in Gebrauchsstellung unter beengten Verhältnissen eingeklemmt ist. Je nach Anordnung der Trennebene oder Trennungslinien zwischen der Leitungseinführung und dem Verschlußteil können dabei die Schenkel des winkligen oder bogenförmigen Verschlußteiles gleich lang oder aber auch verschieden lang sein.

Ausgestaltungen der Erfindung hinsichtlich der Form des Verschlußteiles insbesondere an seinen Rändern, aber auch an seiner Innen- oder Außenseite relativ zu der Leitungseinführung sowie bezüglich der Verbindung zwischen dem Verschlußteil und der Leitungseinführung sind Gegenstand insbesondere der Ansprüche 3 bis 10 und 22 bis 33.

Eine Ausführungsform der Erfindung von besonderer Bedeutung kann darin bestehen, daß der Verschlußteil zweiteilig ist und die Trennstelle der beiden Teile im äußeren Winkelbereich angeordnet ist und daß jedes einzelne Teil des Verschlußteiles schieberartig, z. B. mittels einer Profilierung in einer Gegenprofilierung an der

/4

Leitungeinführung geführt und einschiebbar ist, wobei jedes dieser beiden Verschlußteile einen Schenkel des winkligen Gesamtverschlusses bildet.

Dabei kann ein erstes Teil des Verschlußteiles durch das Einschieben des zweiten Teiles in dessen Gebrauchsstellung sperrbar sein. Die Teile können also verschieden lang sein, wobei ein erstes kürzeres Teil zuerst eingeschoben und in Schließstellung dann von dem zweiten Teil entgegen seiner Schließbewegung hintergriffen ist. Weitere Ausgestaltungsmöglichkeiten der Leitungseinführung sind Gegenstand der Ansprüche 13 bis 20.

Die Leitungseinführung kann dabei an wenigstens einem ihrer Schenkel ein Anschlußgewinde, insbesondere ein Innen- und/oder Außengewinde, vorzugsweise für eine Kabelverschraubung od. dgl. aufweisen.

Um besonders viel Platz beim Einführen eines Kabels in die erfindungsgemäße Leitungseinführung zu haben, kann nach einer Ausgestaltung von eigener schutzwürdiger Bedeutung die Trennebene zwischen dem Verschlußteil und der Leitungseinführung selbst wenigstens bereichsweise durch eine der Längsmittelebenen zumindest eines Schenkels der Leitungseinführung verlaufen. Praktisch kann dann wenigstens eine Hälfte eines solchen Schenkels, sei es eine in Einführrichtung des Kabels insgesamt quer zu dem Kabel liegende Hälfte, sei es eine seitliche Hälfte eines solchen Schenkels als Verschlußteil geöffnet und/oder entfernt werden. Dies ist auch ein Beispiel für eine Ausführungsform, bei der der eine Winkelschenkel des Verschlußteiles dann länger als der andere ist, der lediglich noch ein kurzes Stück der Krümmung in den Übergang zu dem zweiten Schenkel umfaßt.

/5

Es ist dabei aber auch möglich, daß die Trennebene durch die gemeinsame Längsmittelebene beider Schenkel oder eine parallel dazu geringfügig versetzte Ebene verläuft, so daß die gesamte Leitungseinführung zum Öffnen in praktisch zwei gleiche Hälften getrennt werden kann. In diesem Falle ist dann das Verschlußteil praktisch genauso groß oder fast genauso groß wie der übrige Teil der Leitungseinführung.

In all diesen Fällen, bei denen der Verschlußteil insgesamt mittels Steck- und/oder Rastverschlüssen, Haltestiften od. dgl. oder aber teilweise mittels eines Gelenkes und dessen Gelenkachse und im übrigen mittels solcher Verschlüsse gehalten sein kann, ergibt sich eine winkelförmige Leitungseinführung, die beim Einführen des Kabels viel Platz bietet, in Schließstellung aber den Weg des Kabels nicht beengt.

Nachstehend ist die Erfindung mit ihren ihr als wesentlich zugehörenden Einzelheiten anhand der Zeichnung in mehreren Ausführungsbeispielen noch näher beschrieben. Es zeigt in schematisierter Darstellung:

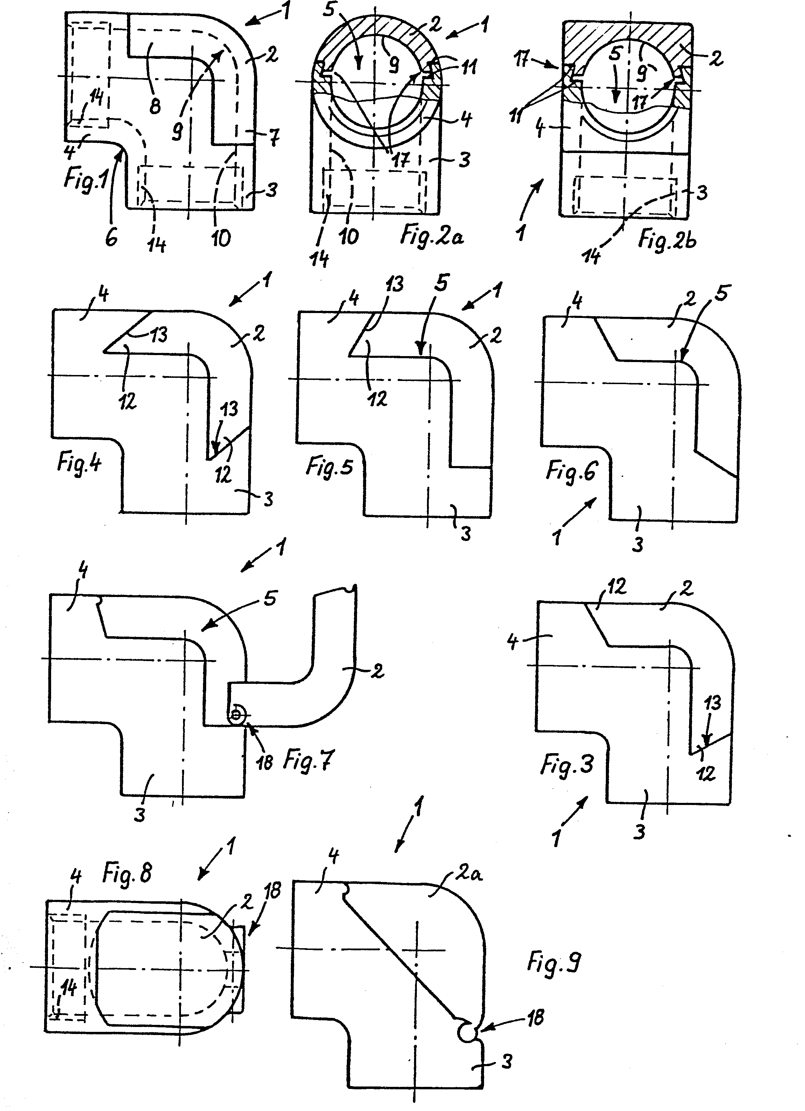

Fig. 1    eine Seitenansicht und

Fig. 2 a
und 2 b    eine Stirnansicht einer Leitungseinführung mit einem an der Außenseite im Winkelbereich angeordneten winkligen Verschlußteil, der über einen Teil des Außenumfanges reicht und mit dem übrigen Teil der Leitungseinführung in Gebrauchsstellung verrastet ist,

Fig. 3    eine der Ausführung nach Fig. 1 und 2 entsprechende Leitungseinführung, bei welcher die Stirnseiten des Verschlußteiles abgeschräft sind, wobei an einem Schenkel eine Hinterschneidung die Schräge des Verschlußteiles übergreift,

Fig. 4    eine Seitenansicht einer Leitungseinführung, bei welcher beide Stirnseiten des Verschlußteiles derart schräg sind, daß sie in Gebrauchsstellung von Hinterschneidungen übergriffen sind, wobei der Verschlußteil quer zu der von ihm zu verschließenden Öffnung unter die Hinterschneidungen einschiebbar ist,

Fig. 5    eine der Fig. 4 entsprechende Ausführungsform, bei der eine Stirnseite des Verschlußteiles parallel zur Mündung des zugehörigen Schenkels der Leitungseinführung verläuft,

Fig. 6    eine Ausführungsform, bei welcher die Stirnseiten des Verschlusses in dem Sinne schräg verlaufen, daß die Öffnung an der Außenseite vergrößert ist,

Fig. 7    eine Ausführungsform, bei welcher das eine Ende des Verschlusses gelenkig an der Leitungseinführung befestigt ist.

Fig. 8
und 9    eine abgewandelte Ausführungsform der Leitungseinführung mit Gelenk zwischen Verschluß und Leitungseinführung,

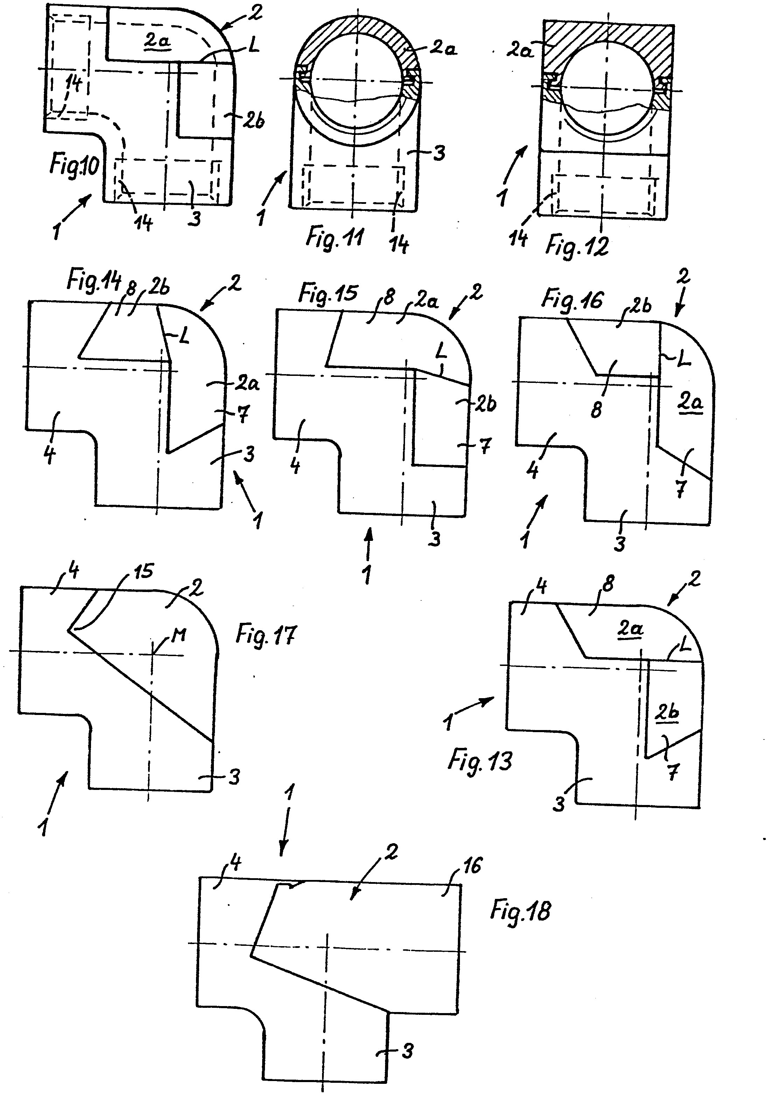

Fig. 10   eine Seitenansicht,

Fig. 11 und 12   eine teilweise im Querschnitt gehaltene Stirnansicht einer abgewandelten Ausführungsform, bei welcher der Verschlußteil zweigeteilt ist,

Fig. 13
bis 16   den Ausführungsformen gemäß Fig. 3 bis 6 entsprechende Abwandlungen einer Leitungseinführung mit jeweils zweigeteilten Verschlußteilen,

Fig. 17   in schematisierter Darstellung eine Ausführungsform, bei welcher der Verschlußteil an den Seiten bis über den Mittelpunkt des Krümmungsradius der Außenkrümmung reicht,

Fig. 18   eine Ausführungsform, bei welcher der Verschlußteil als Rohrstück ausgebildet ist, das in Schließstellung rechtwinklig zu dem einen und in Fortsetzung zu dem anderen Schenkel der rechtwinkligen Leitungseinführung steht,

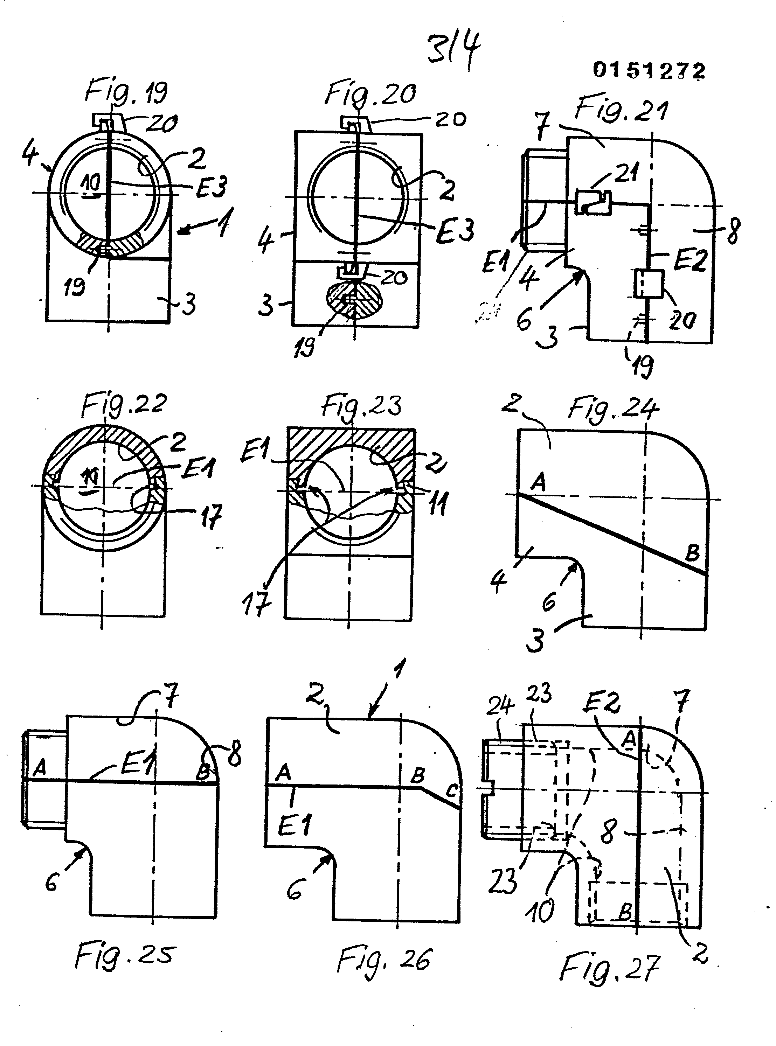

Fig. 19   eine Stirnansicht einer Leitungseinführung mit ringförmigem Querschnitt der beiden Winkelschenkel, wobei eine seitliche Hälfte eines Winkelschenkels als Verschlußteil ausgebildet ist,

Fig. 20   eine der Fig. 19 entsprechende Stirnansicht einer Leitungseinführung mit einem an der Außenseite quadratischen Querschnitt,

Fig. 21   eine Seitenansicht einer Leitungseinführung, bei welcher die beiden jeweils dem Winkelraum abgewandten äußeren Hälften der Winkelschenkel gemeinsam den Verschlußteil bilden,

Fig. 22
und 23    teilweise im Querschnitt gehaltene Stirnansichten zweier Ausführungsbeispiele unterschiedlichen Außenquerschnittes, bei denen die Trennebene zwischen der Leitungseinführung und dem Verschlußteil durch eine Längsmittelebene wenigstens eines Winkelschenkels etwa gemäß Fig. 21, 25, 26, 31, 32 oder 34 verläuft,

Fig. 24    eine Leitungseinführung, bei welcher mehr als die obere Hälfte eines Winkelschenkels und ein Teil des anderen Winkelschenkels gemeinsam den Verschlußteil bilden und die Trennebene von der Mitte des einen Winkelschenkels schräg zu dessen Längsmittelebene verläuft,

Fig. 25    eine Ausführungsform, bei welcher die Trennebene des Verschlußteiles genau durch eine Längsmittelebene eines Winkelschenkels verläuft, so daß dessen außenliegende Hälfte den Verschlußteil bildet,

Fig. 26    ein Ausführungsbeispiel entsprechend Fig. 25, wobei die Trennebene im Bereich des nicht geteilten Winkelschenkels schräg verläuft,

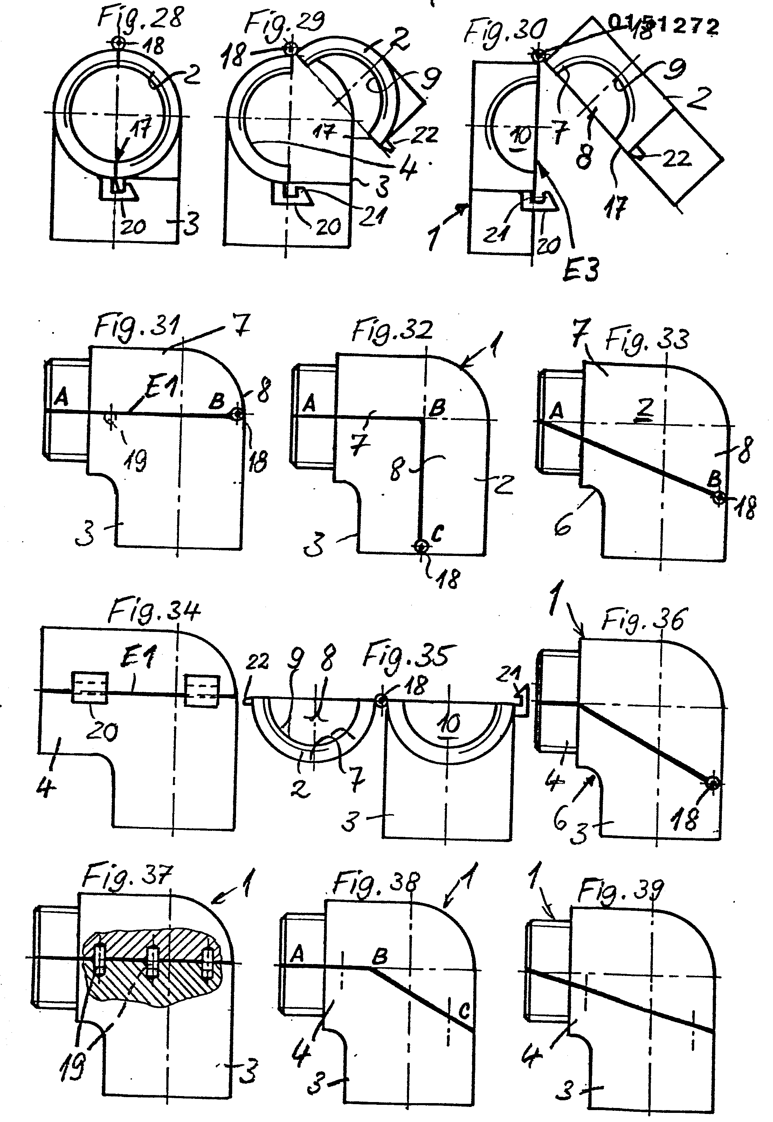

Fig. 27    ein Ausführungsbeispiel, bei welchem der andere Winkelschenkel, der nicht unmittelbar an ein Gehäuse od. dgl. herangeführt ist, entlang seiner Längsmittelebene AB unterteilt ist,

Fig. 28    eine der Fig. 19 entsprechende Ausführungsform, wobei jedoch an dem äußeren Rand der Trennebene des Verschlußteiles ein Gelenk vorgesehen ist,

Fig. 29 die Stirnansicht der Leitungseinführung gemäß
Fig. 28, wobei der Verschlußteil teilweise aufgeschwenkt ist,

Fig. 30 ein Ausführungsbeispiel, bei welchem die gesamte
Leitungseinführung in ihrer gemeinsamen Längsmittelebene beider Schenkel trennbar ist, so daß
eine Hälfte der gesamten Leitungseinführung den
Verschlußteil bildet, wobei der Verschlußteil
teilweise aufgeklappt ist,

Fig. 31 eine der Fig. 25 etwa entsprechende Ausführungsform, wobei jedoch in dem der Mündung des unterteilten Schenkels abgewandten Endbereich eine
gelenkige Verbindung zwischen Verschlußteil und
Leitungseinführung vorgesehen ist,

Fig. 32 eine der Fig. 21 entsprechende Ausführungsform,
wobei an einem Ende der rechteckigen Trennfuge
ein Gelenk vorgesehen ist,

Fig. 33 eine der Fig. 24 entsprechende Ausführungsform
wiederum mit einem Gelenk an dem der Mündung des
einen Schenkels abgewandten Ende des Verschlußteiles,

Fig. 34 eine Seitenansicht und

Fig. 35 eine Stirnansicht einer Ausführungsform, bei
welcher die obere bzw. äußere Hälfte eines Winkelschenkels analog Fig. 25 als Verschlußteil
ausgebildet ist und entlang einem Rand der
Trennebene ein Gelenk und an dem gegenüberliegenden Rand ein Verschluß vorgesehen ist,

Fig. 36
bis 39 abgewandelte Ausführungsformen teils mit einer gelenkigen, teils mit Stiftverbindungen zwischen Verschlußteil und Leitungseinführung mit unterschiedlich angeordneten Trennlinien.

Bei den im folgenden beschriebenen verschiedenen Ausführungsbeispielen sind trotz vorhandener Abweichungen einander entsprechende Teile jeweils mit denselben Bezugszeigen versehen.

Eine im ganzen mit 1 bezeichnete winkelförmige Leitungseinführung hat die Form eines Rohrkrümmers. Um das Einführen von elektrischen Leitungen, Kabeln, Schläuchen od. dgl. zu erleichtern, ist an der Außenseite der Leitungseinführung 1 im Bereich des größeren Krümmungsradius - also dem von den Schenkeln 3 und 4 des Krümmers 1 gebildeten Winkelraum abgewandt - ein öffenbares Verschlußteil 2 vorgesehen. Ist dieser Verschlußteil 2 entfernt oder gemäß Fig. 7 geöffnet, kann ein Kabel zunächst in den ersten Schenkel 3 des Krümmers 1 geradlinig eingesteckt werden, wonach es außerhalb des Versschlusses 2 zunächst mit großem Radius zu einer Schlaufe umgebogen werden kann, deren Ende dann in den zweiten Schenkel 4 eingesteckt und aus diesem wieder herausgezogen werden kann, bis die Schlaufe innerhalb der Leitungseinführung 1 verschwunden ist. Danach kann der Verschlußteil 2 in Schließposition gebracht werden.

Damit eine möglichst große Öffnung ein bequemes Einziehen der beschriebenen Kabelschlaufe ermöglicht, ohne daß später der Verschlußteil 2 das eingezogene Kabel oder den eingezogenen Schlauch gegen die Innenecke 6 preßt, ist vorgesehen, daß der Verschlußteil 2 ein im Längsschnitt winkliges oder bogenförmiges Formstück ist, dessen Winkelschenkel 7 und 8 jeweils in Richtung der beiden Winkelschenkel 3 und 4 der winkligen Leitungseinführung 1 orientiert sind, wobei sie gleich oder bei einzelnen Ausführungen verschieden lang sein können. Dabei paßt der Verschlußteil 2 bündig in die Umrißform der Leitungseinführung 1 zumindest an den in Schließstellung miteinander in Berührung befindlichen Rändern. In den Ausführungsbeispielen ist ferner vorgesehen, daß das Formstück die Fortsetzung der Wandungskontur der Leitungseinführung 1 in ihrem äußeren Krümmungsbereich ist. Ferner weist der Verschlußteil 2 im Inneren eine rinnenförmige Ausnehmung 9 auf, die die Innenhöhlung 10 der winkelförmigen Leitungseinführung 1 fortsetzt und mit dieser bündig ist. Praktisch stellt also der Verschlußteil 2 ein lösbares Stück der Wandung des Rohrkrümmers 1 dar. Der Platz für ein Kabel im Krümmungsbereich der Leitungseinführung 1 kann gegebenenfalls dadurch noch vergrößert sein, daß die Innenhöhlung der Leitungseinführung im Bereich des Verschlußteiles 2 durch eine Schwächung der Wand des Verschlußteiles 2 und/oder eine Ausbuchtung des Verschlußteiles erweitert ist, was aber in den Ausführungsbeispielen der Einfachheit halber nicht gezeichnet ist.

Zur Befestigung des Verschlußteiles 2 an den winklig verlaufenden Innenrändern ist gemäß den Fig. 1 bis 3 sowie gegebenenfalls auch 6 und 7 jeweils ein Schnappverschluß vorgesehen. Man erkennt deutlich, wie die entsprechend mit Hinterschneidungen versehenen und Stufen 11 aufweisenden Ränder 17 gemäß Fig. 2 formschlüssig verrastbar sind. Dies ist vor allem bei einer Ausführungsform zweckmäßig, bei der die Leitungseinführung 1 wenigstens teilweise, insbesondere ganz aus Kunststoff besteht.

In den Ausführungsformen gemäß Fig. 3, 4 und 5 hat der Verschlußteil 2 in Einführrichtung des Kabels an wenig-

/12

stens einem seiner Enden oder seiner Stirnseite einen Vorsprung 12 und das winkelförmige Einführungsteil 1 an der zugehörigen Gegenfläche eine Hinterschneidung 13 zur formschlüssigen Aufnahme dieses Vorsprunges 12. In Kombination mit einem Rastverschluß wird so die Verschlußsicherheit verbessert.

In Fig. 4 ist eine Ausführungsform dargestellt, bei der an beiden stirnseitigen Enden des Verschlußteiles 2 ein von außen nach innen vorstehender Vorsprung 12 vorgesehen ist, der zu entsprechenden Hinterschneidungen 13 der winkelförmigen Leitungseinführung 1 paßt, wobei der Verschlußteil 2 quer zur Kabeleinführrichtung schwalbenschwanzartig in seinen Sitz einschiebbar und gegebenenfalls verrastbar sein kann. In einem solchen Fall könnte also der Verschlußteil 2 praktisch senkrecht zur Zeichnungsebene in seine Verschlußposition einführbar sein. Dies ist vor allem dann zweckmäßig, wenn das im Inneren befindliche Kabel die Innenhöhlung 10 nicht vollständig ausfüllt. Im dargestellten Fall sind die beiden Hinterschneidungen 13 aber parallel zueinander, so daß der Verschlußteil auch in Richtung dieser Hinterschneidungen von außen her eingefügt und eingesteckt werden kann.

Gemäß den Fig. 6 und 7 kann wenigstens eine der Stirnseiten des Verschlußteiles 2 von innen nach außen schräg verlaufen und eine Schnapp- od. dgl. Befestigung des Verschlußteiles 2 an der Einführung 1 haben. Dadurch wird vor allem im Außenbereich die Öffnung 5 für das Einführen der Kabelschlaufe vergrößert. Darüber hinaus stehen dann die stirnseitigen Öffnungsränder an den Schenkeln 3 und 4 etwas zurück, was dem Einführen der Kabelschlaufe ebenfalls entgegenkommt.

Dabei zeigt Fig. 7 bis 9 eine Besonderheit, die darin besteht, daß der Verschlußteil 2 im Bereich einer Stirnseite am äußeren Rand schwenkbar angelenkt ist, wobei er
für die Schließstellung wiederum einen Schnappverschluß
aufweisen kann. Dadurch ist der Verschlußteil 2 unverlierbar mit der Leitungseinführung 1 verbunden. Gemäß
Fig. 9 kann das Gelenk 18 trenn- und verrastbar und sogar
einstückig angeformt sein. In den Fig. 10 bis 16 ist noch
angedeutet, daß der Verschlußteil 2 zweiteilig sein kann,
wobei die Trennstelle der beiden Teile 2 a und 2 b im
äußeren Winkelbereich angeordnet ist und jedes einzelne
Teil des Verschlußteiles 2 schieberartig, z. B. mittels
einer Profilierung, wie sie in Fig. 12 angedeutet ist,
in einer Gegenprofilierung an der Leitungseinführung 1,
geführt und einschiebbar ist, wobei jedes dieser beiden
Verschlußteile 2 a und 2 b einen Schenkel 7 bzw. 8 des
winkligen Gesamtverschlusses 2 bildet. Ein erstes kürzeres Teil 2 b des Verschlußteiles 2 kann dabei dann durch
Einschieben eines zweiten längeren Teiles 2 a in dessen
Gebrauchsstellung sperrbar sein. Welches dabei das kürzere und welches das längere Verschlußteil-Stück ist,
kann dabei je nach auftretenden Kräften des Kabels an der
Außenseite der Leitungseinführung gewählt werden.

Das jeweils zweite Teil 2 a des zweiteiligen Verschlusses
kann dabei in Gebrauchsstellung verrastbar und/oder mittels Sicherungsstift od. dgl. fixierbar sein. Im übrigen
kann zum Sichern der Schließstellung auch des einteiligen
Verschlußteiles 2 wenigstens ein Sicherungsstift od. dgl.
vorgesehen sein.

In den Ausführungsbeispielen gemäß den Fig. 1, 2 a, 2 b
sowie in Fig. 10 bis 12 erkennt man noch, daß an wenigstens einem Schenkel 3 oder 4 der Leitungseinführung 1
ein Abschlußgewinde 14, insbesondere ein Innengewinde,
gegebenenfalls auch ein Außengewinde vorgesehen sein kann, das dann gegebenenfalls auch gleich eine Kabelverschraubung haben kann.

Zunächst sei noch erwähnt, daß durch die Fig. 2 b und 12 angedeutet ist, daß das Leitungseinführungsteil 1 neben einem runden Außenquerschnitt - vgl. Fig. 2 a und 11 - auch einen eckigen Außenquerschnitt bei rundem Innenquerschnitt haben kann. Gegebenenfalls kann auch der Innenquerschnitt rund sein.

Bei den Ausführungsbeispielen gemäß den Fig. 10, 13 und 16 ist vorgesehen, daß die seitliche Projektion der Verbindungslinie L zwischen den beiden Einzelteilen 2 a und 2 b des zweiteiligen Verschlußteiles 2 geradlinig in Fortsetzung des längeren Verschlußteiles 2 a verläuft, wobei das zweite Verschlußteil 2 b in Gebrauchsstellung rechtwinklig dagegen ansteht.

In den Fig. 14 und 15 erkennt man demgegenüber, daß die seitliche Projektion der Verbindung L der beiden den Verschlußteil 2 bildenden Einzelteile 2 a und 2 b schräg verläuft und der kleinere Verschlußteil 2 b an der Stoßstelle an seiner Außenseite zumindest in der Projektion gesehen kürzer als an der inneren Seite ist. Dadurch ergibt sich eine gute Halterung dieses kürzeren Verschlußteiles 2 b, so daß in diesem Falle eine Rastverbindung gegebenenfalls eingespart werden kann.

In Fig. 17 ist eine Ausführungsform dargestellt, die zu einer noch größeren Öffnung für ein einzuführendes Kabel an der Außenseite der Leitungseinführung 1 führt. In diesem Falle ist ein kappenförmiger Verschlußteil 2 vorgesehen, dessen Seitenwände bis über den Krümmungsmittelpunkt M der Außenkrümmung bzw. über die geometrische Mitte M der Leitungseinführung 1 in deren Abbiegebereich

/ 15

reicht, wobei im Ausführungsbeispiel an einem Schenkel 4 der Leitungseinführung 1 eine Hinterschneidung 15 zur Aufnahme einer Gegenformung des Verschlußteiles 2 vorgesehen ist.

In Fig. 18 erkennt man ein Ausführungsbeispiel, bei welchem der Verschlußteil 2 zum Verbinden mit der winkelförmigen Leitungseinführung 1 seinerseits als Anschlußstutzen 16 ausgebildet ist, der den einen Schenkel 4 der Leitungseinführung 1 etwa geradlinig fortsetzt und rechtwinklig zu dem anderen Schenkel 3 steht. Gegebenenfalls ist auch eine Kombination der Ausführungsbeispiele 17 und 18 möglich, indem wahlweise der in Fig. 17 gezeigte Verschlußteil 2 oder aber der in Fig. 18 gezeigte Anschlußstutzen 16 an der Leitungseinführung 1 befestigt wird, falls im letzteren Falle eine Abzweigung von Leitungen benötigt wird.

In den Fig. 19 bis 39 sind Leitungseinführungen 1 dargestellt, bei denen die Trennebene zwischen dem Verschlußteil 2 und der Leitungseinführung 1 selbst wenigstens bereichsweise durch eine der Längsmittelebenen E 1 oder E 2 eines der beiden Schenkel 3 oder 4 oder aber die gemeinsame Längsmittelebene E 3 verläuft. Dabei kann die Hälfte zumindest eines Schenkels 3 oder 4 als Verschlußteil 2 vorgesehen sein. Es ergeben sich dann große Öffnungen für ein bequemes Einführen oder Einfügen des jeweiligen Kabels. In einzelnen Figuren ist die Trennebene als seitliche Projektion als Linie AB oder aber auch als abgewinkelte Linie ABC verdeutlicht, wobei im letzteren Fall praktisch zwei sich schneidende Ebenen die Trennfuge oder Trennebene bilden.

Die Fig. 19 und 20 sind Beispiele, bei denen eine seitliche Hälfte des Schenkels 4 entlang der gesamten Längsmittelebene E 3 entfernbar ist, um als Verschlußteil 2 zu dienen. Das gleiche gilt für die Fig. 28 und 29, wobei eine solche seitliche Hälfte als Verschlußteil 2 im letzteren Falle in noch zu beschreibender Weise gelenkig aufklappbar ist.

Die Fig. 22, 23, 25, 27, 31, 34, 35 und 37 zeigen Ausführungsformen, bei denen die Trennebene zwischen dem Verschlußteil 2 und der Leitungseinführung 1 durch diejenige Längsmittelebene E 1 eines Schenkels 3 oder 4 verläuft, die quer zu dem anderen Schenkel angeordnet ist. Dabei wird also praktisch eine äußere oder obere, dem Winkelraum zwischen den Schenkeln 3 und 4 abgewandte Hälfte eines Schenkels als Verschlußteil 2 ausgebildet.

In den Fig. 21 und 32 ist die Trennfuge zwischen Verschlußteil 2 und dem übrigen Teil der Leitungseinführung 1 von zwei rechtwinklig zueinander angeordneten, durch die Mitten E 1 und E 2 der beiden Schenkel 3 und 4 verlaufenden Ebenen gebildet und entlang einer der beiden Trennebenen, im Ausführungsbeispiel der Trennebene E 1, sind ineinandersteckbare Schiebeführungen 21 und an der rechtwinklig dazu vorgesehenen Trennebene E 2 ein Steck- und/oder Rastverschluß 19 oder 20 vorgesehen. In diesem Falle ergibt sich ein besonders großer Verschlußteil 2, der über den gesamten Außenbereich der Leitungseinführung 1 reicht und praktisch beide äußeren Hälften der Schenkel insbesondere einstückig umfaßt.

Die Fig. 24, 26, 33, 36, 38 und 39 zeigen Leitungseinführungen 1, bei welchen die Trennebene zwischen dem Verschlußteil 2 und der übrigen Leitungseinführung 1 jeweils von der Mitte einer Mündung eines Schenkels 4 ausgehend zumindest bereichsweise schräg zu der Mittelebene E 1 dieses Schenkels 4 verläuft und den der Ecke oder Krümmung des winkelförmigen Leitungsstückes 1 naheliegenden Bereich des zweiten Schenkels 3 quer zu dessen Verlauf schneidet. In Fig. 26 und 38 ist dieser schräge Teil der Trennfuge durch die Linie BC bezeichnet. In den übrigen Figuren verläuft die gesamte Trennebene schräg zu der Längsmittelebene E 1.

Fig. 30 ist eine ganz besondere Ausführungsform, bei welcher nicht nur wie in Fig. 19, 20, 28 und 29 ein Schenkel 4, sondern die gesamte Leitungseinführung 1 entlang einer insbesondere durch ihre gemeinsame Längsmittelebene E 3 - oder geringfügig dazu parallel verlaufende Ebene - trennbar ist. Es entstehen dann praktisch zwei winklige Halbschalen, so daß das Kabel gekrümmt in die eine Halbschale eingelegt und dann durch Auflegen oder Einklappen der zweiten Halbschale gesichert werden kann.

Bei einem Teil der dargestellten Ausführungsbeispiele, beispielsweise Fig. 19 und 20 oder 22 und 23, aber auch weiteren Beispielen ist vorgesehen, daß an vorzugsweise einander gegenüberliegenden Rändern des Verschlußteiles 2 Steckelemente 19 und/oder Rastelemente 20 zum Zusammenfügen und Schließen vorgesehen sind.

Bei anderen Ausführungsbeispielen, z. B. der schon erwähnten Fig. 30, aber auch den Fig. 28, 29 oder 35 oder auch 31 bis 33 ist an einem Ende oder Rand des Verschlußteiles 2 ein auch schon anhand der Fig. 7 und 9 erwähntes Gelenk 18 und insbesondere dann an dem entgegengesetzten Ende oder Rand ein Verschluß 20, vorzugsweise ein Rastverschluß vorgesehen. In Fig. 30 erkennt man dabei, daß das Gelenk 18 bei einer durch die Längsmittelebene E 3 der gesamten Leitungseinführung 1 verlaufenden Trennebene entlang einem Meridian an der Außenseite des einen Winkelschenkels 4 angeordnet sein kann. Genauso gut kann es auch an dem Winkelschenkel 3 an dessen Außenseite, also dem Winkelraum zwischen den Schenkeln 3 und 4 abgewandt, vorgesehen werden. Ebenso kann dieses Gelenk 18 an einer solchen Außen-Meridianlinie verlaufen, wenn nur eine seitliche Hälfte eines Winkelschenkels gemäß den Fig. 28 und 29 als Verschlußteil 2 aufklappbar ist.

In den Fig. 34 und 35 ist vorgesehen, daß bei einer entlang einer Längsmittelebene E 1 eines Schenkels, im Ausführungsbeispiel des Schenkels 4, quer zu dem anderen Schenkel 3 orientierten Trennebene die Achse des Gelenkes 18 an einem seitlichen Rand des Verschlußteiles parallel zu der Orientierung des trennbaren Schenkels 4 verläuft. Am gegenüberliegenden Rand sind zwei Rastverschlüsse 20 angeordnet, die hier wie in anderen Fällen von einem federnden Haken 21 an dem einen Teil und einem in diesen Haken 21 einführbaren Gegenstück 22 an dem anderen Teil gebildet sind.

In den Ausführungsbeispielen gemäß den Fig. 31, 32 oder auch 33 bis 36 verläuft die Achse des Gelenkes 18 zum Aufklappen des Verschlußteiles 2 quer zu den beiden Winkelschenkeln 3 und 4 und ist an dem der Mündung des öffenbaren Schenkels entgegengesetzten Ende des Verschlußteiles 2 angeordnet. Dies entspricht etwa auch der Anordnung des Gelenkes 18 in Fig. 7 oder 9.

Es wurde schon erwähnt, daß die Winkelschenkel 7 und 8 des Verschlußteiles gleich lang sein können, was nicht nur für die Fig. 1 bis 16, sondern auch für die Ausführungsform nach Fig. 21 oder 32 zutrifft. Ferner können sie aber auch verschieden lang sein, wie sich deutlich bei Fig. 25, 26 oder auch 38 oder 39 zeigt, wo der eine Winkelschenkel des Verschlußteiles praktisch der Länge des Winkelschenkels 3 der gesamten Leitungseinführung 1 entspricht, während der andere Winkelschenkel nur einen kurzen Bogen gegebenenfalls mit einer geringfügigen Verlängerung in die Richtung des zweiten Winkelschenkels 4 umfaßt.

In Fig. 27 erkennt man noch, daß an der Mündung des einen Schenkels, in diesem Falle des Schenkels 4, vorzugsweise eines ungeteilten Schenkels, ein Innengewinde 23 und ein darin einschraubbares Rohrstück 24 vorgesehen sein können, wobei das Innengewinde 23 einen inneren Anschlag 25 für das Rohrstück 24 bildet. Dadurch kann dieses Rohrstück 24 eine winkelmäßig begrenzte Drehbarkeit haben, so daß die gesamte Leitungseinführung 1 relativ zu dem Rohrstück 24 um einen Winkelbetrag verstellbar ist. Dadurch kann die Leitungseinfphrung 1 an unterschiedlich schräg ankommende Leitungen gut angepaßt werden.

Insgesamt ergibt sich eine Leitungseinführung, die preiswert herstellbar ist, im wesentlichen als stabiler Rohrkrümmer ausgebildet sein kann, um unterschiedlichen Schrägzug-Kräften des Kabels gut widerstehen zu können, die aber dennoch eine genügend große Öffnung hat, um ein Kabel bequem zunächst geradlinig und dann über eine Schlaufe einführen zu können.

Alle in der Beschreibung, den Ansprüchen, der Zusammenfassung und der Zeichnung dargestellten Merkmale und Konstruktionsdetails können sowohl einzeln als auch in beliebiger Kombination miteinander wesentliche Bedeutung haben.

- Ansprüche -

/20

PATENTANWÄLTE
DIPL.-ING. H. SCHMITT
DIPL.-ING. W. MAUCHER

78 FREIBURG I. BR.
DREIKÖNIGSTR. 13
TELEFON: (0761) 70773
70774

**0151272**

Firma
Anton Hummel GmbH
Metallwarenfabrik
Mozartstraße 2 - 5
7808 Waldkirch

UNSERE AKTE - BITTE STETS ANGEBEN!

E 84 487 MR

Winkelförmige Leitungseinführung

Ansprüche

1. Winkelförmige Leitungseinführung zum Einführen von insbesondere elektrischen Leitungen oder Kabeln unter einem Winkel, vorzugsweise einem rechten Winkel, in ein Gehäuse od. dgl., wobei das Kabel zunächst schräg oder parallel zur Gehäusewand verläuft und etwa senkrecht in diese eintritt und die Biegung der Leitung oder des Kabels durch die Einführung vorgesehen ist und wobei an der Außenseite dieser Leitungseinführung in deren Bereich mit dem größeren Krümmungsradius ein öffenbarer Verschluß zum Einführen des Kabels zunächst in nur einen Schenkel der Einführung und zum Bilden einer Schlaufe sowie zum Einführen des Kabels dann in den zweiten Schenkel der Einführung vorgesehen ist, d a d u r c h g e k e n n z e i c h n e t , daß der Verschlußteil (2) ein - zumindest in der Längsmittelebene der Leitungseinführung (1) oder einer dazu parallelen Ebene . winkliges oder bogenförmiges Formstück ist, dessen Winkelschenkel (7, 8) jeweils in Richtung der beiden Winkelschenkel (3, 4) der Leitungseinführung (1) orientiert sind.

/21

21

2. Leitungseinführung nach Anspruch 1, dadurch gekennzeichnet, daß die Schenkel des Verschlußteiles (2) gleich lang oder verschieden lang sind.

3. Leitungseinführung nach Anspruch 1 oder 2, dadurch gekennzeichnet, daß ihre Innenhöhlung im Bereich des Verschlußteiles (2) durch eine Schwächung der Wand des Verschlußteiles (2) und/oder eine Ausbuchtung des Verschlußteiles erweitert ist.

4. Leitungseinführung nach einem der Ansprüche 1 bis 3, dadurch gekennzeichnet, daß das als Verschlußteil dienende Formstück (2) die Fortsetzung der Wandungskontur der winkelförmigen Leitungseinführung (1) in ihrem äußeren Krümmungsbereich ist.

5. Leitungseinführung nach einem der Ansprüche 1 bis 4, dadurch gekennzeichnet, daß der Verschlußteil (2) im Inneren eine Ausnehmung (9) aufweist, die die Innenhöhlung (10) der winkelförmigen Leitungseinführung (1) fortsetzt und mit dieser bündig ist.

6. Leitungseinführung nach einem der Ansprüche 1 bis 5, dadurch gekennzeichnet, daß zur Befestigung des Verschlußteiles (2) an den Innenrändern jeweils ein Schnappverschluß vorgesehen ist.

7. Leitungseinführung nach einem der Ansprüche 1 bis 6, dadurch gekennzeichnet, daß der Verschlußteil (2) in Einfphrrichtung des Kabels an wenigstens einem seiner Enden oder seiner Stirnseite einen Vorsprung (12) und das winkelförmige Einführungsteil (1) an der zugehörigen Gegenfläche eine Hinterschneidung (13) zur formschlüssigen Aufnahme dieses Vorsprunges (12) aufweist.

8. Leitungseinführung nach einem der Ansprüche 1 bis 7, dadurch gekennzeichnet, daß an beiden stirnseitigen Enden des Verschlußteiles (2) ein von außen nach innen vorstehender Vorsprung (12) vorgesehen ist, der zu einer entsprechenden Hinterschneidung (13) der winkelförmigen Leitungseinführung (1) paßt, und daß der Verschlußteil (2) quer zur Kabeleinführrichtung schwalbenschwanzartig in seinen Sitz einschiebbar und gegebenenfalls verrastbar ist.

9. Leitungseinführung nach einem der Ansprüche 1 bis 8, dadurch gekennzeichnet, daß wenigstens eine der Stirnseiten des Verschlußteiles (2) von innen nach außen schräg verläuft und eine Schnapp- od. dgl. Befestigung des Verschlußteiles (2) an der Einführung (1) vorgesehen ist.

10. Leitungseinführung nach einem der Ansprüche 1 bis 9, dadurch gekennzeichnet, daß der Verschlußteil (2) an einem Rand schwenkbar angelenkt ist und für die Schließstellung einen Schnappverschluß od. dgl. aufweist.

11. Leitungseinführung insbesondere nach einem der vorstehenden Ansprüche, dadurch gekennzeichnet, daß der Verschlußteil (2) zweiteilig ist und die Trennstelle der beiden Teile (2 a, 2 b) im äußeren Winkelbereich angeordnet ist und daß jedes einzelne Teil des Verschlußteiles (2) schieberartig, z. B. mittels einer Profilierung in einer Gegenprofilierung an der Leitungseinführung (1), geführt und einschiebbar ist, wobei jedes dieser beiden Verschlußteile (2 a, 2 b) einen Schenkel des winkligen Gesamtverschlusses (2) bildet.

12. Leitungseinführung nach einem der Ansprüche 1 bis 11, dadurch gekennzeichnet, daß ein erstes Teil des Verschlußteiles (2) durch das Einschieben des zweiten Teiles (2 a) in dessen Gebrauchsstellung sperrbar ist.

13. Leitungseinführung nach einem der Ansprüche 1 bis 12, dadurch gekennzeichnet, daß das zweite Teil (2 a) eines zweiteiligen Verschlusses in Gebrauchsstellung verrastbar, mittels Sicherungsstift od. dgl. fixierbar ist.

14. Leitungseinführung nach einem der Ansprüche 1 bis 13, dadurch gekennzeichnet, daß sie wenigstens teilweise aus Kunststoff besteht.

15. Leitungseinführung nach einem der Ansprüche 1 bis 14, dadurch gekennzeichnet, daß zum Sichern der Schließstellung auch des einteiligen Verschlußteiles (2) wenigstens ein Sicherungsstift od. dgl. vorgesehen ist.

16. Leitungseinführung nach einem der Ansprüche 1 bis 15, dadurch gekennzeichnet, daß an wenigstens einem ihrer Schenkel ein Anschlußgewinde (14), insbesondere Innen- und/oder Außengewinde, vorzugsweise für eine Kabelverschraubung od. dgl. vorgesehen ist.

17. Leitungseinführung nach einem der Ansprüche 1 bis 16, dadurch gekennzeichnet, daß die seitliche Projektion der Verbindungslinie (L) zwischen den beiden Einzelteilen (2 a, 2 b) eines zweiteiligen Verschlußteiles (2 a) verläuft und das zweite Verschlußteil (2 b) in Gebrauchsstellung rechtwinklig dagegen ansteht.

18. Leitungseinführung nach einem der Ansprüche 1 bis 17, dadurch gekennzeichnet, daß die seitliche Projektion der Verbindung der beiden den Verschlußteil (2) bildenden Einzelteile schräg verläuft und der kleinere Verschlußteil (2 b) an der Stoßstelle an seiner Außenseite kürzer als an der inneren Seite ist.

19. Leitungseinführung nach einem der vorstehenden Ansprüche, dadurch gekennzeichnet, daß ein kappenförmiger Verschlußteil (2) vorgesehen ist, dessen Seitenwände bis über den Krümmungsmittelpunkt der Außenkrümmung bzw. über die geometrische Mitte (M) der Leitungseinführung (1) in deren Abbiegebereich reicht, wobei vorzugsweise zumindest an einem Schenkel (4) der Leitungseinführung eine Hinterschneidung (15) zur Aufnahme einer Gegenformung des Verschlußteiles (2) vorgesehen ist.

20. Leitungseinführung insbesondere nach einem der vorstehenden Ansprüche, dadurch gekennzeichnet, daß der Verschlußteil (2) zum Verbinden mit der winkelförmigen Leitungseinführung seinerseits als Anschlußstutzen (16) ausgebildet ist, der den einen Schenkel der Leitungseinführung vorzugsweise geradlinig fortsetzt und rechtwinklig zu dem anderen Schenkel steht.

21. Leitungseinführung nach einem der vorstehenden Ansprüche, dadurch gekennzeichnet, daß wahlweise ein Verschlußteil (2) oder ein Anschlußstutzen (16) an der von dem Verschlußteil (2) verschließbaren Öffnung der Leitungseinführung (1) ansetzbar ist.

22. Leitungseinführung nach einem der vorstehenden Ansprüche, dadurch gekennzeichnet, daß das Gelenk (18) für das Verschlußteil (2) trenn- und verrastbar, vorzugsweise einstückig an den Teilen angeformt ist.

23. Leitungseinführung insbesondere nach einem der vorstehenden Ansprüche, dadurch gekennzeichnet, daß die Trennebene zwischen dem Verschlußteil (2) und der Leitungseinführung (1) selbst wenigstens bereichsweise durch eine der Längsmittelebenen (E 1, E 2; E 3) zumindest eines Schenkels der Leitungseinführung verläuft.

24. Leitungseinführung nach einem der Ansprüche 1 bis 23, dadurch gekennzeichnet, daß die Hälfte zumindest eines Schenkels als Verschlußteil (2) vorgesehen ist.

25. Leitungseinführung nach einem der Ansprüche 1 bis 24, dadurch gekennzeichnet, daß die Trennebene zwischen dem Verschlußteil (2) und der Leitungseinführung (1) durch diejenige Längsmittelebene (E 1) eines Schenkels verläuft, die quer zu dem anderen Schenkel angeordnet ist.

26. Leitungseinführung nach einem der Ansprüche 1 bis 25, dadurch gekennzeichnet, daß die Trennfuge zwischen Verschlußteil (2) und dem übrigen Teil der Leitungseinführung (1) von zwei rechtwinklig zueinander angeordneten, durch die Mitten (E 1 und E 2) der beiden Schenkel (3 und 4) verlaufenden Ebenen gebildet ist und daß entlang einer der beiden Trennebenen ineinandersteckbare Schiebeführungen (21) und an der rechtwinklig dazu vorgesehenen Trennebene ein Steck- und/oder Rastverschluß (19, 20) vorgesehen ist.

27. Leitungseinführung nach einem der Ansprüche 1 bis 26, dadurch gekennzeichnet, daß die Trennebene von der Mitte einer Mündung eines Schenkels ausgehend mindestens bereichsweise schräg zu der Mittelebene (E 1) dieses Schenkels (4) verläuft und den der Ecke des winkelförmigen Leitungsstückes (1) naheliegenden Bereich des zweiten Schenkels (3) quer zu dessen Verlauf schneidet.

28. Leitungseinführung nach einem der Ansprüche 1 bis 27, dadurch gekennzeichnet, daß ein Schenkel oder die gesamte Leitungseinführung (1) entlang einer insbesondere durch ihre gemeinsame Längsmittelebene (E 3) oder geringfügig parallel dazu verlaufende Ebene trennbar ist.

29. Leitungseinführung nach einem der Ansprüche 1 bis 28, dadurch gekennzeichnet, daß an vorzugsweise einander gegenüberliegenden Rändern des Verschlußteiles jeweils Steck- (19) und/oder Rastelemente (20) zum Zusammenfügen und Schließen vorgesehen sind.

30. Leitungseinführung nach einem der Ansprüche 1 bis 29, dadurch gekennzeichnet, daß an einem Ende oder Rand des Verschlußteiles (2) ein Gelenk (18) und insbesondere an dem entgegengesetzten Ende oder Rand ein Verschluß (20), vorzugsweise ein Rastverschluß, vorgesehen ist.

31. Leitungseinführung nach einem der Ansprüche 1 bis 30, dadurch gekennzeichnet, daß das Gelenk (18) bei einer durch die Längsmittelebene (E 3) der gesamten Leitungseinführung (1) oder eines Schenkels (3 oder 4) verlaufenden Trennebene entlang einem Meridian an der Außenseite des einen Winkelschenkels (4) angeordnet ist.

32. Leitungseinführung nach einem der Ansprüche 1 bis 31, dadurch gekennzeichnet, daß bei einer entlang einer Längsmittelebene (E 1) eines Schenkels (4) quer zu dém anderen Schenkel (3) orientierten Trennebene die Achse des Gelenkes (18) an einem seitlichen Rand des Verschlußteiles parallel zu der Orientierung des trennbaren Schenkels (4) verläuft.

33. Leitungseinführung nach einem der Ansprüche 1 bis 32, dadurch gekennzeichnet, daß die Achse des Gelenkes (18) zum Aufklappen des Verschlußteiles (2) quer zu beiden Winkelschenkeln (3, 4) verläuft und an dem der Mündung des öffenbaren Schenkels entgegengesetzten Ende des Verschlußteiles (2) angeordnet ist.

34. Leitungseinführung nach einem der Ansprüche 1 bis 33, dadurch gekennzeichnet, daß an der Mündung eines Schenkels, vorzugsweise eines ungeteilten Schenkels, ein Innengewinde (23) und ein darin einschraubbares Rohrstück (24) vorgesehen sind, wobei das Innengewinde (23) einen inneren Anschlag (25) für das Rohrstück (24) bildet.

- Zusammenfassung -

114

0151272

Fig.1

Fig.2a

Fig.2b

Fig.4

Fig.5

Fig.6

Fig.7

Fig.3

Fig.8

Fig.9

Fig.10

Fig. 11

Fig. 12

Fig.14

Fig.15

Fig.16

Fig. 17

Fig.13

Fig.18

0151272

Fig. 19

Fig. 20

Fig. 21

Fig. 22

Fig. 23

Fig. 24

Fig. 25

Fig. 26

Fig. 27

414

01 51 272

Fig.28 Fig.29 Fig.30

Fig.31 Fig.32 Fig.33

Fig.34 Fig.35 Fig.36

Fig.37 Fig.38 Fig.39